# EUROPEAN PATENT APPLICATION

(11) **EP 1 251 373 A2**
(43) Date of publication of application: **23.10.2002**
(21) Application number: 02252024.1
(22) Date of filing: 21.03.2002
(51) Int. Cl.: G02B 6/16

(54) **Coated optical fiber**

(30) Priority: 13.04.2001 JP 2001114694; 17.01.2002 JP 2002008864
(71) Applicant: THE FURUKAWA ELECTRIC CO., LTD., Tokyo 100-8322 (JP)
(72) Inventor: Takahashi, Fumio, The Furukawa Electrical Co., Ltd, Tokyo 100-8322 (JP)
(74) Representative: Dealtry, Brian

(57) **Abstract**

At least two layers (2,3) of coating materials are applied to the periphery of a silica-based optical fiber (1) to fabricate a coated optical fiber. This coated optical fiber has durability against a proof test of 1.38 GPa or more through the entire length thereof and also has 1.4 N or less of a coating strip force required for removing coating from the silica-based optical fiber. Thereby, when a proof test applying an elongation of 2% or more is conducted, the coating can be prevented from delaminating from the optical fiber and workability in removing the coating also becomes excellent. The coated optical fiber preferably makes a coated optical fiber for components.

## Description

### Field of the Invention

The present invention relates to coated optical fiber especially designed for optical components.

### Background of the Invention

In order to increase transmission capacities , studies on wavelength division multiplexing (WDM) optical transmission system have been proceeding. Especially,new applications such as optical amplification and Fiber Bragg Grating require new specification for coating mateials of optical fibers.
This new specification is mainly resulting from use in the enclosed modules,which require many number of optical fibers in short length.

### Summary of the Invention

This invention is to provide the following coated optical fiber. More specifically, the coated optical fiber comprising:
a silica-based optical fiber; and
at least two layers of coating materials formed around the periphery of the silica-based optical fiber,
wherein the coated optical fiber has durability against a proof test of 1.38 GPa or more through the entire length thereof, and has a coating strip force of 1.4 N or less.

### Brief Description of the Drawings

Fig. 1 is a schematic cross sectional view illustrating one example in this invention
Fig. 2 is a configurational example of an optical fiber in this invention.

### Detailed Description

A coated optical fiber for components, used in WDM system, is mainly used in enclosed devices.

Therefore, the coated optical fiber for components is not required such severe environmental performance as the fiber designed for transmission line.

Meanwhile,components use requires the end process of the optical fibers such as Connectorizing and/or Grating in many number of optical fibers in short length,and also small bending for compact housing.

Therefore, the following items are required particularly. That is:
1) To be housed inside a module in a smaller diameter as much as possible , a high durability against a proof test of of 1.38GPa or more is needed.
2) Remove coating in many number of fibers requires smaller coating strip force for work efficiency.

However, coating materials for components use are, in most cases, diverted from those designed for transmission lines. Therefore, requirements of coating materials for components use has not been disclosed yet so far.

Japanese Patent Laid-Open No. 205516/1985 disclosed coated optical fibers having durability against a proof test of 2% or more, studies on the coating material thereof has been made in the direction to increase an adhesion to an optical fiber.

From the point of view, coating materials designed for transmission lines is not always suitable for those for components use.

In one aspect, this invention is to provide a coated optical fiber combining both having durability against sufficient proof test strength and having small coating strip force, preferably designed for components use.

Hereafter, an embodiment of the coated optical fiber in the invention will be described with reference to drawings.

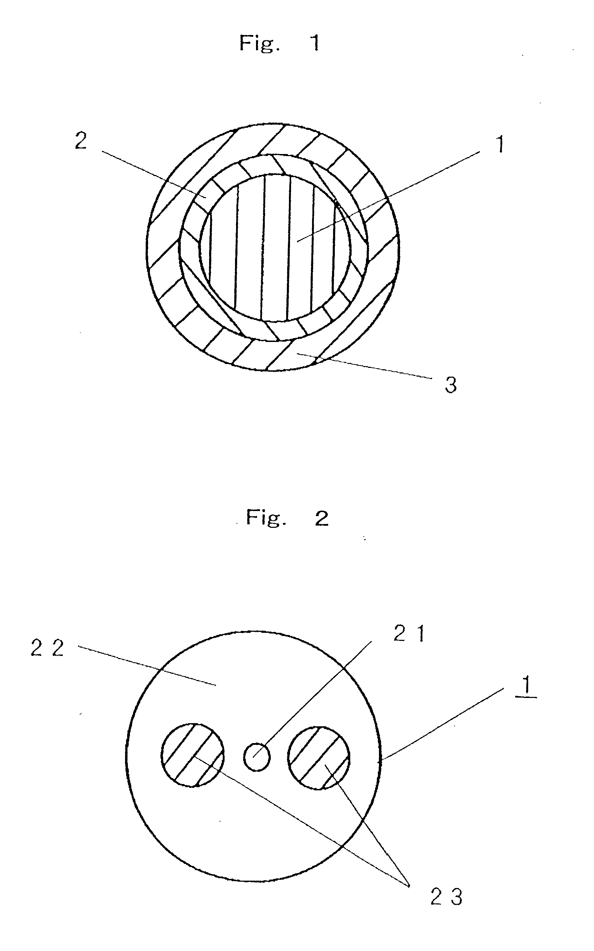

Fig. 1 is a schematic cross sectional view illustrating one example in this invention

The coated optical fiber of this embodiment is configured to have an optical fiber 1 coated with two layers of coating materials 2 and 3. More specifically, in the embodiment, the optical fiber 1 is a silica-based optical fiber, and the primary coating 2 is formed in contact around the periphery of the optical fiber 1. The secondary coating 3 is covered around the periphery of the primary coating 2.

The silica-based optical fiber 1 has a variety of types. Here, any type may be adopted, but one example is shown in Fig. 2. Fig. 2 is a configurational example of an optical fiber in this invention.The optical fiber 1 comprises of core 21, cladding 22 and stress applying part 23. This optical fiber 1 is a polarization maintaining fiber called as PANDA type, which is cut into short length for use as optical components in general.

Additionally, the position and the refractive index profile of the core 21 in Fig.2 are almost similar to the conventional SMF. However,the polarization maintaining optical fiber is not limited thereto; but includes another type of construction such as non-circular core type of fiber without the stress applying part 23.

Another example of the optical fiber 1 is an FBG (Fiber Bragg Grating) optical fiber.

Generally, the FBG optical fiber often has a stepped refractive index profile structure as similar to the conventional single-mode fiber (SMF),but includes more germanium in the core than the SMF for easily forming a grating. Of course,the composition of the FBG optical fiber is not limited thereto; it may have other compositions.

In the embodiment,the coated optical fiber has durability against a proof test of 1.38 GPa or more through the entire length ,to enable to be housed inside the module compactly. In addition, the "proof test of 1.38 GPa or more" means a proof test applying an elongation of approximately 2% or more to the coated optical fiber. Furthermore, for test method of the proof-test, see ITU-T standard G. 650 section 5.6 issued in October 2000.

The coated optical fiber of the embodiment has a coating strip force of 1.4 N or less for improving the efficiency of the work to remove coating on end processes. Moreover, the "coating strip force" is defined by an average coating strip force except the first peak in accordance with IEC-60793-1-B6 where length of coating stripped is 50 mm and a strip rate is 500 mm/minute.

If the coating strip force exceeds 1.4 N,the efficiency of the work to strip the coating , especially in processing a great number of fiber ends,is deteriorated.

As described above, the coated optical fiber of the embodiment has such a high strength that it can endure a proof test of 1.38 GPa or more and a low coating strip force of 1.4 N or less. Therefore, it is suitable for components.

As a specific scheme to realize such the coated optical fiber, the following requirements (1) to (4) should be comsidered. (1) A coating material for the primary coating 2 has an adhesion Fm to silica glass that is durable to a proof test and has a coating strip force not greater more than needed.

Additionally, the "adhesion Fm of the coating material for the primary coating 2 to silica glass" is defined as a value that is measured for a sample having a thickness of nominal 200 µ m according to the "90-degree peeling method", as described in "JIS Z-0237" after the sample is kept for 24 hours in an atmosphere at ordinary temperature and orsinary relative humidity. In making the sample, the coating material for the primary coating 2 is first formed into a sheet shape on a silica glass plate , and then an ultraviolet ray of 1 J/cm² is irradiated onto the coating material to cure it. In this manner, the sample is made.

(2) Since coated optical fibers for components are mainly used within airtight case or building , it is not necessary to consider water resistance so severely. Therefore, the optical fiber 1 does not need to be adhered to the primary coating 2 excessively and a coating strip force is desirable as small as possible.

(3) A Young' s modulus E₁ of the primary coating 2 after curing is high enough to grip the optical fiber 1 during proof-testing.

(4) In a coating material for the secondary coating 3, a Young's modulus E₂ is high enough not to cause a loss increase due to lateral pressure applied to the coated optical fiber 1.

In the embodiment, in consideration of the requirements (1) to (4), the combination of the primary coating and the secondary coating is optimized, and thereby the coated optical fiber suitable for components use can be provided.

More specifically, in the material for the primary coating 2, the adhesion Fm to the silica-based optical fiber 1 is in the range of 5 N/m ≤ Fm ≤ 15 N/m, and the Young's modules E₁ after cured is in the range of 1.0 MPa ≤ E₁ ≤ 5.0 MPa.

The adhesion Fm in the range of 5 N/m ≤ Fm ≤ 15 N/m can prevent the optical fiber 1 from deterioration over a long time and improve the efficiency on the work of stripping the coating.

And , if the Young's modulus E₁ is lower than 1.0 MPa, the primary coating 2 is so soft that it tends not to maintain to grip the optical fiber 1 during proof-testing. On the other hand, if the Young's modulus E₁ is higher than 5 MPa, the coated optical fiber easily causes loss increase against a lateral pressure.Furthermore, more preferably, the Young's modules E₁ after cured is in the range of 1.0 MPa ≤ E₁ ≤ 3 MPa.

Moreover, in the embodiment, the Young's modules E₂ of the secondary coating after cured ranges within 500 MPa ≤ E₂ ≤ 1500 MPa.

By using such the primary coating 2 and the secondary coating 3 as described above,the coated optical fiber can be made having a durability against a proof-test of 1.38GPa or more and excellent workability in stripping the coating . That is, the excellent effect of providing the coated optical fiber optimized for for components use can be exerted.

Hereafter, specific examples are shown to examine the effectiveness of the embodiment.

Here, specific examples 1 to 4 are in accordance with the present invention and comparative examples 1 to 4 are references for comparison. Two layers of coating materials 2 and 3 are applied to each of the optical fiber 1. The outer diameter of the optical fiber 1 is 125 µm. Additionally, both the primary coating 2 and the secondary coating 3 are urethane-acrylate based ultraviolet cured materials ; the outer diameter of the primary coating 2 and the secondary coating is approximately 190 µm and 250 µm respectively.

The coated optical fibers of the specific examples 1 to 4 and the comparative examples 1 to 4 have differences in types of the optical fiber 1 and materials for primary coating 2 as shown in Table 1. Additionally, in the column of the "types of optical fibers" in Table 1, "polarization maintaining" indicates a polarization maintaining optical fiber, and "FBG" indicates an FBG optical fiber. Furthermore, in the column of "materials for primary coating", A indicates that having 7 MPa of the Young's modulus E₁ after cured and 17 N/m of an adhesion to silica glass , B indicates that having 2 MPa of the Young's modulus E₁ after cured and 8 N/m of an adhesion to silica glass, C indicates that having 1.0 MPa of the Young's modulus E₁ after cured and 12 N/m of an adhesion to silica glass, and D indicates that having 0.7 MPa of the Young' s modulus E₁ after cured and 4 N/m of an adhesion to silica glass.

Furthermore, in each of the coated optical fibers,the secondary coating 3 is configured of coating material having 500 MPa of a Young's modulus E₂ after cured.

**(Table 1)**

| | Configuration of coated optical fibers | | Proof test | Coating strip force | Workability |
|---|---|---|---|---|---|
| | types of optical fibers | Materials for primary coating | | | |
| Specific example 1 | polarization maintaining | B | O | 1.2 | good |
| Specific example 2 | polarization maintaining | C | O | 1.2 | good |
| Specific example 3 | FBG | B | O | 1.2 | good |
| Specific example 4 | FBG | C | O | 1.2 | good |
| Comparative example 1 | polarization maintaining | A | O | 2.0 | bad |
| Comparative example 2 | polarization maintaining | D | × | 1.0 | good |
| Comparative example 3 | FBG | A | O | 2.0 | bad |
| Comparative example 4 | FBG | D | × | 1.0 | good |

For each of the above coated optical fibers ,proof-testing and coating strip testing was carried out. The proof-testing was in accordance with a test method described in ITU-T G. 650; a tension of 1.38 GPa or more was applied to the entire length of the coated optical fibers and examine delamination of the primary coating 2 from the optical fiber 1 was examined. The coating strip testing was in accordance with IEC-60793-1-B6 and the average strip force excluding the first peak mas measured.

Furthermore, it was examined to see whether workability in stripping coating is good or bad.

Table 1 shows the results of the proof tests, coating strip tests, and workability in removing coating.Unit of the coating strip force is N (newton) . In the column of "proof test", a circle indicates a good result that the coating was not delaminated from the optical fiber 1 ,and a cross indicates a bad result that the coating was delaminated from the optical fiber 1.

As shown in Table 1, when a material B (the Young's modulus E₁ is 2 MPa and the adhesion to silica glass is 8 N/m) or material C (the Young's modulus E₁ is 1.0 MPa and the adhesion to silica glass is 12 N/m) was used for the primary coating 2, the primary coating 2 was not delaminated from the optical fiber 1 through the entire length of optical fiber after the proof test. Also, the workability in stripping the coating was excellent.

On the other hand, when a material A (the Young's modules E₁ is 7 MPa and the adhesion to silica glass is 17 N/m) was used for the primary coating 2, the workability in stripping the coating was significantly deteriorated as low as 20 to 40% ,compared to other materials. Additionally, when a material D (the Young's modules E₁ is 0.7 MPa and the adhesion to silica glass is 4 N/m) was used for the primary coating 2, the primary coating 2 was delaminated from the optical fiber 1 after the proof test.

As also shown in the experimental results, all the coated optical fibers of the specific examples 1 to 4 having the configuration of the embodiment had a high strength required for compact housing and an improved efficiency of the work to strip the coating.

In addition, the invention is not limited to the embodiment, which can be modified for various forms. For example, the optical fiber 1 had two layers of coating materials in the embodiment, but the optical fiber 1 may have three layers or more of coating materials, for instance. Furthermore, examples where the polarization maintaining optical fiber or FBG optical fiber is used as the optical fiber 1 were shown, but silica-based optical fibers other than these may be used.

## Claims

1. A coated optical fiber comprising:
a silica-based optical fiber; and
at least two layers of coating materials formed around a periphery of the silica-based optical fiber,
wherein the coated optical fiber has durability against a proof test of 1.38 GPa or more through an entire length thereof and has a coating strip force of 1.4 N or less.

2. A coated optical fiber according to claim 1 wherein,
the coating materials have a primary coating formed around the periphery of the silica-based optical fiber and a secondary coating formed around a periphery of the primary coating;
a material for the primary coating has an adhesion Fm to silica glass in the range of 5 N/m ≤ Fm ≤ 15 N/m, and a Young' s modulus E₁ after cured ranging within 1.0 MPa ≤ E₁ ≤ 5 MPa; and
a material for the secondary coating has a Young's modulus E₂ after cured in the range of 500 MPa ≤ E₂ ≤ 1500 MPa.

3. A coated optical fiber according to claim 1 wherein, the silica-based optical fiber is a polarization maintaining optical fiber.

4. A coated optical fiber according to claim 2 wherein, the silica-based optical fiber is a polarization maintaining optical fiber.

5. A coated optical fiber according to claim 3 wherein, the polarization maintaining optical fiber comprises of stress applying parts.

6. A coated optical fiber according to claim 4 wherein, the polarization maintaining optical fiber comprises of stress applying parts.

7. A coated optical fiber according to claim 1 wherein, the silica-based optical fiber is designed easily to form a grating.

8. A coated optical fiber according to claim 2 wherein, the silica-based optical fiber is designed easily to form a grating.
